# EUROPÄISCHE PATENTANMELDUNG

(11) **EP 3 056 621 A1**
(43) Veröffentlichungstag der Anmeldung: **17.08.2016**
(21) Anmeldenummer: 15154700.7
(22) Anmeldetag: 11.02.2015
(51) Int. Cl.: E04B 1/68, F16L 5/02, H02G 3/22

(54) **WIEDERVERWENDBARE SCHUTZVORRICHTUNG GEGEN WASSERFORTLEITUNG**

(71) Anmelder: Fibre Optics CT GmbH, Consulting & Testing, 70437 Stuttgart (DE)
(72) Erfinder: Wolf, Roland, 70437 Stuttgart (DE)
(74) Vertreter: Jeck, Anton

(57) **Zusammenfassung**

Die Anmeldung umfasst eine Vorrichtung zum Schutz vor Wassereintritt und Feuerdurchdringung in Zwischenräumen und in Hohlräumen durch Dehnfugen in Gewerken, Kabelkanälen, Gebäudedurchführungen, die mit Kabeln und/oder Rohren belegt sind und je nach Anforderung als Brandschutz- bzw. Leckage-Schutzvorrichtungen, Deponien, Tankanlagen, Transport- und/oder Sicherheitsbehältern im Seebereich dienen. Die Vorrichtung besteht aus einem in der Länge und Breite festgelegten Flachschlauchkissen, das an den Außenseiten mit einem Quellvlies-Dichtband ausgerüstet ist. Das Leckage- bzw. Schutz-Flachschlauchkissen im Innern ist mit mindestens einem Quellvlies-Dichtband versehen, das an der Längsseite und der Querseite zugfeste Verschlüsse aufweist und über mindestens ein kunststoffbeschichtetes, metallenes Druckluftventil mit Ventilverlängerung befüllt oder evakuiert wird und je nach Anforderung mit einem Funk-Überwachungs- bzw. Kontrollsystem ausgestattet werden kann.

## Beschreibung

Die Erfindung betrifft eine wiederverwendbare Schutzvorrichtung gegen Wasserfortleitung in Kanälen und Gewerken gemäß dem Oberbegriff des Anspruchs 1.

In einer ersten am 31.05.2005 als EP 1686 670 B1 veröffentlichten Patentanmeldung ist eine Vorrichtung zum Abdichten von Zwischenräumen, Anheben oder Sichern von Werkstücken beschrieben.

In einer zweiten am 18.08.2006 als EP 1867 904 B1 veröffentlichten Patentanmeldung ist eine Vorrichtung zum gas- und druckwasserdichten Verschließen von Hohlräumen, zwischen Mauerdurchbrüchen sowie zwischen Kabelkanälen und zur Abdichtung von Zwischenräumen bei Stellwänden gemäß dem Oberbegriff des Anspruchs 1 beschrieben.

Die Aufgabe der Erfindung besteht darin, aus Verbundfolie mit metallener Einlage eine wiederverwendbare, quellvliesbeschichtete Schutzvorrichtung gegen Wasserfortleitung gemäß der im Oberbegriff des Anspruchs 1 genannten Art zu schaffen: Die wiederverwendbare Schutzvorrichtung mit Wechselwirkung in Form eines Kissens bei Dehnfugen in Gewerken und/oder von mit Rohren und/oder Kabeln belegten Kanälen und Gebäudedurchführungen mit einer Abdichtung zwischen den mehrfach belegten Kabeln und/oder Rohren mit Quellvliesdichtbändern und/oder -sternen umhüllt, und je nach Anforderung als Wasserfortleitungsschutz bei Leckage von Wassergemisch-Gefahrstoffen mit Verwendung in Tankanlagen, um Lager- und Transportbehälter, Deponien und/oder im Seebereich mit einem innenliegenden schnell wasserquellenden Quellvlies und einem Reifenventil ausgerüstet sein kann.

Die abdichtende Wirkung wird durch zwei Funktionen erreicht. Die erste abdichtende Funktion hat das Abdichtkissen mit Ventil, welches unter Druck das Quellvliesdichtband und/oder Abdichtsterne in die Zwischenräume presst. Die zweite abdichtende Funktion kommt erst zum Tragen, wenn Wasser oder Chemikaliengemische pH2, pH12 und/oder ca. 80 % Benzin, Diesel, Kerosin oder Paraffinölgemisch das Quellvlies aktiviert. Bei Wassereintritt quillt das im PP-Vlies eingebettete Polymer an den nicht verpressten Abdichtstellen auf und schafft durch seine extrem dichte, gelförmige, in das PP-Vlies eingebettete Dichtschicht den Schutz gegen Wasserfortleitung während des Wassereintritts. Nach Trocknung der Gelschicht kann ein Überdruck bei Wärme von ≥ 0,3 bar durch das Quellvlies entweichen; bei neuem Wassereintritt quillt das Polymer wieder zuverlässig auf.

Die Schutzvorrichtung gegen Wasserfortleitung mit Wechselwirkung in Gewerken soll universell für ein breites Anwendungsspektrum geeignet sein und mittels hoher Kerbzäh-, Berstdruck-, Chemikalien- und Wasserdruckbeständigkeit mit einem geringen Eigengewicht ab 850 g/m² Anforderung erfüllen, mechanisch einen wirksamen, elastischen Flächenanpress- und/oder Wassersperrdruck aufbringen. Des Weiteren soll in der ersten Funktion mit der aufblasbaren von außen quellvliesbeschichteten bis 50 m langen Vorrichtung Dehnfugen in breiten von 2 cm bis 40 cm in einer Rekordzeit von etwa 10 min/Meter zuverlässig und wirtschaftlich abgedichtet werden.

In der zweiten Funktion sollen Personen und Sachschäden durch Wasserdurchdringung und Fortleitung mit Folgen von Eiszapfenbildung und Glättebildung zuverlässig vermieden werden.

Mit der gegen Wasserfortleitung abdichtenden Vakuum-Schutzvorrichtung mit innenliegenden Quellvlies-Dichtbändern in Abmessungen bis 10 m Breite mit bis 100 m Länge können Deponien, Tankanlagen gegen radioaktive und/oder explosive Stoffe, umweltbelastende Gefahrstoffe oder Leckagen durch Havarien zuverlässig abgedichtet werden. Die nach Anwendungsfall modifizierbare Schutzvorrichtung soll durch ihr geringes Flächengewicht 850, 1300 oder 1800 g/m² seine hohe Flexibilität, hoher Kerbzähigkeit mit ca. 40 N/cm² und hoher Berstdruckbeständigkeit mit ca. 9 bar und je nach Anforderung für eine Leckstellenüberwachung mit 2,4 GHZ Funk-Überwachungssystem oder gleichwertigem Kontrollsystem ausgestattet werden können. Mit Überwachung einzelner Grundelemente können betriebsbedingte Setzungen und/oder Leckstellen durch Chemikaliengemische pH2, pH12, Benzin, Diesel, Kerosin und Paraffinöl und auch Temperaturen bei Wechselbeanspruchung analysiert werden.

Die bekanntesten Dehnfugenabdichtsysteme, nämlich
- Fugenbänder aus Gummi oder Bitumen,
- Fugenbleche,
- quellfähige Fugeneinlagen aus Gummi,
- Injektionsschlauch,
- Injektionsverpressungen,
- PUR-Gel-Injektionsverpressungen
haben die bekannten Nachteile, dass die Abdichtungen unter Betriebsbedingungen Setzungen, Scherungen, Dehnungen im Temperaturbereich von -30 °C bis +60 °C unbeständig sind.

Ein weiterer Nachteil bei den Injektionsverpressungen ist ein sehr hoher Arbeitsaufwand für Injektionsbohrungen, die vor der Injektionsverpressung angebracht werden müssen, wodurch die Wirtschaftlichkeit des Systems sehr beeinträchtigt wird. Die vorteilhaften, endgültigen, dem jeweiligen Anwendungsbereich entsprechenden Modifikationen des vorgenannten Grundbauteils zeigen die nachfolgenden Beschreibungen.

Bei Verwendung von quellvliesumhüllten PE oder gleichwertigen Rundschnüren in Meterware kann bei Dehnfugen eine Sickerwasserdurchdringung vermieden werden. Mit den quellvliesumhüllten, flexiblen Brandschutzbändern in Kombination mit den quellvliesbeschichteten Abdichtkissen mit Ventil wird mit Kabeln und/oder Rohren belegten Gebäudeein- und -durchführungen und/oder Dehnfugen in zwei Funktionen eine absolute Wasser-Feuerabdichtung erreicht. Die erste abdichtende Funktion hat das Abdichtkissen mit Ventil gegen drückendes Wasser; die zweite abdichtende Funktion gegen Durchbrennen wird durch Aufplatzen des Abdichtkissens mit Ventil bei Wärmeeinwirkung bei einer Temperatur von > 100 °C mit anschließendem Aktivieren der flexiblen Brandschutzbänder erreicht.

Bei Verwendung als Wassersperrschutzvorrichtung zum wasserdichten Verschließen von Dehnfugen und/oder Bewegungsfugen ist das mit Luft befüllbare Abdichtsystem (Ventil), vorzugsweise vollflächig, mit einem wasserquellenden Quellvlies-Dichtband umschlossen, um eine völlige Wassersperre zu den Fugenflanken zu erzielen. Das Flachschlauchkissen wird für eine gleichmäßige und/oder wechselnde Fugenbreite je nach Typ, zum Beispiel 2 cm bis 8 cm, 2 cm bis 17 cm oder 2 cm bis 300 cm, längsförmig über Fugenversatzstellen, Bögen und/oder Ecken gelegt und bis zur Druckfüllung mit PE- (oder gleichwertigen) Rundschnurabschnitten gesichert.

Die Befüllung des Flachschlauchkissens erfolgt über ein metallenes Ventil, welches mit einer in das Flachschlauchkissen eingeschweißten Verlängerung verbunden ist. Beim Aufpumpen des Flachschlauchkissens mit Luft oder einer Flüssigkeit werden die Quellvliesdichtbänder in die Zwischenräume von Fugenversatzstellen gepresst. Die Demontage der wiederverwendbaren Vorrichtungen ist durch Evakuierung mittels Vakuumpumpe oder Ausbauen des Ventileinsatzes einfach möglich.

Zum Abdichten von Dehnfugen in Längen von > 23 m wird ein zweites und weitere Abdichtkissen etwa 0,25 m bis 1 m deckungsgleich mit dem ersten Abdichtkissen in die Dehnfuge eingelegt, so dass Dichtigkeit an der Überlappung erzielt wird.

Die Füllung der Flachschlauchkissen ist möglich, indem zuerst das längste Abdichtkissen und anschließend das kürzeste Abdichtkissen bis zum Soll-Fülldruck befüllt wird.

Zum Abdichten von Dehnfugen in Bogenbrücken werden Abdichtkissen in Längen des Bogenradius eingesetzt. Alle Abdichtkissen werden jeweils an den Enden deckungsgleich und etwa 0,25 m in die Dehnfugen eingelegt und mit einer PE-Rundschnur bis zur Druckfüllung gesichert.

Zum Abdichten von Zwischenräumen im Durchmesser von 50 mm bis 250 mm, beispielsweise bei mehrfach belegten Kanälen oder Gebäudeeinführungen, und Innendurchmesser von ≤ 150 mm wird ein Quellvlies-Abdichtstern zwischen die zwei, drei oder vier Kabel und/oder Rohre eingelegt. Durch Aufpumpen mit Luft wird je nach Anwendungsbereich eine Abdichtungsvorrichtung mit Wechselwirkung erzielt, so dass bei Kabelschutzrohren der Überdruck "Luft durch Wärme im Kunststoffrohr" entweichen kann und vom Rohrende eine Wasserdruckdichtigkeit bis 5 m bei einer Wassersäule von - 0,5 bar erzielt wird.

Zum Abdichten gegen drückendes Wasser und Durchbrennen von mit Kabeln und/oder Rohren belegten Kanälen, Gebäudeein- und -durchführungen werden die Zwischenräume hinter dem mit Abdichtkissen (Ventil) eingebauten Wasserschutz mit quellvliesumhüllten, flexiblen Brandschutzbändern ausgefüllt. Die Dichtigkeit gegen Durchbrennen wird durch Aufplatzen des Abdichtkissens mit Ventil bei einer Wärmeeinwirkung von > 100 °C und Aktivieren der Brandschutzbänder durch Aufschäumen erreicht.

Bei Verwendung der Schutzvorrichtungen gegen Wasserfortleitung bei Leckagen vor und/oder nach Havarien, Schutz vor umweltbelastenden Stoffen oder Wassereintritt in Lager- und/oder Transportbehälter ist das vakuumevakuierte Abdichtkissen (Ventil) vollflächig dem jeweiligen Anwendungsbereich entsprechender Modifikation mit mindestens einer Lage wasserquellendem Quellvlies umschlossen, um eine völlige Abdichtung zu erzielen.

Die Wassergemisch-Schutzvorrichtungen als Grundprofilkörper sind in einer Modifikation als endlose Meterware gedacht, die einfach aneinandergereiht und/oder übereinander gelegt durch besondere Ausformungen und/oder Bearbeitungen in Verbindung mit entsprechenden Halterungen reversibel angebracht werden, was bei einer Wiederverwendung erwünscht ist oder wobei die Abdichtkissen (Ventil) dauerhaft beim Bahngasschweißen so miteinander verbunden sind, dass Druckänderungen mit einem 2,4-GHZ-Funk-Überwachungssystem, an dem ein Ventil angebracht ist, zu lokalisieren sind.

Die Wasserschutzvorrichtung in einer weiteren Modifikation zum Schutz vor Wassereintritt in Lager-, Transport- und/oder Sonderbauteilbehälter, die sich je nach Anwendungsfall aus einem Grundprofilkörper und/oder mehrere Grundprofilkörper zusammenhängend als Matte durch entsprechende Halterungen mittels Seilen miteinander verbunden sind. Vorstellen kann man sich, dass die Grundkörper mittels Nägeln, Schrauben, Magnetplatten oder auf der Unterseite mit einer selbstklebenden Masse aus Butyl-Kautschuk oder modifiziertem Bitumen zur schnellen Befestigung angebracht sind.

Die Erfindung wird nun an Hand von Ausführungsbeispielen näher erläutert. Es zeigen:
- Fig. 1: eine perspektivische Ansicht einer wiederverwendbaren Schutzvorrichtung gegen Wasserfortleitung als Abdichtkissen mit Reifenventil zum Befüllen und Evakuieren in Breiten von 100 mm bis 450 mm und Längen von 150 mm bis 23 m, das im Bahngasschweißen und Heißsiegelschweißverfahren rundum mit einer 9 bar berstdruckbeständigen Aluminium-Verbundfolie und Reifenventil verschweißt und mit Quellvliesdichtband umhüllt ist;
- Fig. 2: einen Querschnitt einer der Ansicht der Fig. 1 ähnlichen Schutzvorrichtung, die zur kreisförmigen Verwendung in mit Kabeln und/oder Röhren belegten Kanälen und/oder Gewerken zur Kabel- und/oder Rohr-Zwischenraumabdichtung mit Wechselwirkung bei Wärme und Wasser vorgesehen ist, bei der ein Quellvlies-Abdichtstern eingebracht ist;
- Fig. 3: eine perspektivische Ansicht der in Fig. 2 gezeigten Kabelund/oder Rohr-Zwischenraumabdichtung, hergestellt aus zwei übereinander gelegten Quellvlies-Abdichtbändern in der Längsrichtung als Quellvlies-Abdichtstern mit mindestens einer Längsverschweißung;
- Fig. 4: eine perspektivische Ansicht der in Fig. 2 und 3 gezeigten Zwischenraumabdichtung mit Wechselwirkung mit zwei übereinandergelegten Quellvlies-Abdichtbändern, zweimal vernäht oder verschweißt in der Längs- und einmal in der Querrichtung als Quellvlies-Einschiebe-Abdichtstern;
- Fig. 5: eine perspektivische Ansicht einer der Fig. 1 ähnlichen Wasserschutzvorrichtung in Gewerken, Brücken, Gebäuden und/oder Übergängen bei einem bogenförmigen Fugenverlauf und/oder Dehnfugen mit Längen > 23 m, bei dem mehrere Abdichtkissen (Ventil) versetzt bzw. übereinandergelegt eingebracht sind;
- Fig. 6: eine perspektivische Ansicht einer der Fig. 1 und 5 ähnlichen Wasserschutzvorrichtung in Gewerken, in dem Abdichtkissen (Ventil) zwischen den Fugenflanken eingebracht sind;
- Fig. 7: einen Querschnitt der Figuren 1, 5 und 6 mit der Ausgestaltung, dass zwei Abdichtkissen (Ventil) überlappt im Bereich von Fugenversatzstellen über Betonreste eingebracht sind;
- Fig. 8: einen Querschnitt der Figuren 1, 5, 6 und 7 mit der Ausgestaltung, dass ein oder zwei Abdichtkissen (Ventil) im Bereich von Fugenversatzstellen bzw. Ausbruchsstellen eingebracht ist bzw. sind;
Fig. 9 einen Querschnitt der Figuren 1, 5, 6, 7 und 8 mit der Ausgestalung, dass in Gewerken zwei Abdichtkissen (Ventil) in den Dehnfugen übereinander gelagert eingebracht sind;
Fig. 10 einen Querschnitt der Figuren 1, 5, 6, 7 und 9 mit der Ausgestaltung, dass bei einer Dehnfugenbreite von 300 mm ein Abdichtkissen (Ventil) eingebracht ist;
Fig. 11 einen Querschnitt der Fig. 1 mit der Ausgestaltung, dass in Gewerken das Abdichtkissen (Ventil) an einem Stück über Ecken eingebracht ist;
Fig. 12 eine perspektivische Ansicht eines aufgeschnittenen, wiederverwendbaren Grundelements der Chemikaliengemisch-Schutzvorrichtung mit innenliegenden, mindestens eine Lage enthaltenden Quellvlies-Dichtbändern gegen Wasserdurchdringung als Vakuum-Abdichtkissen (Ventil), das als Meterware in Breiten bis 12 m und Längen bis 100 m im Bahngasschweißen die übereinander gelagerten Grundelemente rundum mit einer Aluminiumverbundfolie mit einer Kerbzähigkeit von 40 N/cm² mit Halterung zug- und reißfest umhüllt;
Fig. 13 eine perspektivische Ansicht einer der Fig. 12 ähnlichen Wasserschutzvorrichtung in Gewerken, bei der das Grundelement der Abdichtkissen (Ventil) ohne Halterungen ausgebildet ist;
Fig. 14 eine perspektivische Ansicht einer der Fig. 12 ähnlichen Wasserschutzvorrichtung in Gewerken, bei der die Verbundfolien Grundelemente an der Oberfläche mit einer kerbzähen, zug- und reißfesten Verbindung im Bahngasschweißen hergestellt ist;
Fig. 15a/15b perspektivische Ansichten von den Figuren 12, 13 und 14 ähnlichen Wasserschutzvorrichtungen in Gewerken, in dem die Grundelemente aneinandergereiht und im Bahngasschweißen die Grundelemente mit einem Verbundfolienstreifen miteinander zug- und reißfest verbunden sind;
Fig. 16 eine perspektivische Ansicht einer der Fig. 14 und 15b ähnlichen Wasserschutzvorrichtung in Gewerken, in denen die Verbundfolie bzw. Grundelemente mit der Quellvliesseite auf das Bauwerk oder Behälter aufgelegt und/oder an den Wänden angeklebt ist bzw. sind, oder die Verbundfolie entsprechend der zu erwartenden Wassersäule beschwert und in Breiten von 140, 300, 600, 900 und 1200 mm mit Längen bis 100 m eingebracht ist;
Fig. 17 einen Querschnitt einer Wasserschutzvorrichtung in Gewerken, bei denen die Verbundfolie unterhalb der Fuge als Wasserablaufrinne in Breiten von 140, 300 und 600 mm und Längen bis 500 m hergestellt ist;
Fig. 18 eine perspektivische Ansicht einer quellvliesumhüllten Rundschnur als Meterware aus PE-Schaum oder flexiblem Brandschutzmaterial, die in Dehnfugen oberhalb der Fuge eine Sickerwasser- und/oder nicht drückende Wasserdurchdringung verhindert;
Fig. 19 eine perspektivische Ansicht einer Wasser-Feuer-Durchdring-schutzvorrichtung, bestehend aus einem quellvliesumhüllten, flexiblen Brandschutzband, das einzeln eine Sickerwasserdurchdringung zum Brandschutzband verhindert, oder in Kombination mit dem Abdichtkissen mit Ventil, das sich als Wassersperre bis 10 m Wassersäule in Dehnfugen vor dem quellvliesumhüllten Brandschutzband befindet; im Brandfalle > 100 °C platzt das Abdichtkissen mit Ventil mit anschließendem Aufquellen des Brandschutzbandes, so dass ein Feuer-Durchbrennschutz erreicht wird;
Fig. 20 eine perspektivische Ansicht einer der Fig. 19 ähnlichen Wasser-Feuer-Durchdringschutzvorrichtung, die kreisförmig um Kabel und Röhre im belegten und mit Abdichtkissen (Ventil) abgedichteten Kabelkanälen-, Rohren-, Gebäudeein- und -durchführungen gewickelt ist.

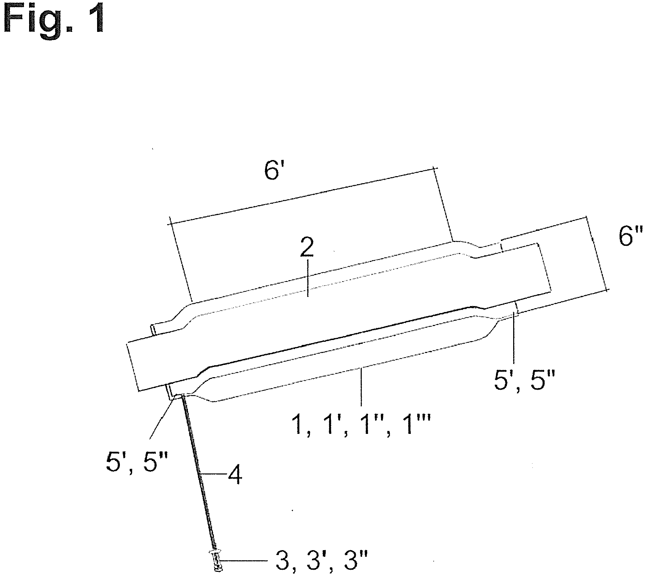

Die Fig. 1 zeigt die Vorrichtung, bestehend aus einem beidseitig außen mit Quellvlies-Dichtband (2) beschichteten Flachschlauchkissen (1) mit einem Druckluftventil (3, 3', 3"), welches mit einer metallenen, kunststoffbeschichteten Ventilverlängerung (4) verbunden ist, die sich an einer der 150 mm bis 23 m langen Längsseite (6') oder an den 10 cm - 60 cm großen Stirn- bzw. Breitseiten (6") des Flachschlauchkissens (5") befindet und die bei einlagiger Anwendung zur optimalen Druckverteilung dient. Die Ausbildung als Flachschlauchkissen wird durch Herstellung von druckdichten Verschlüssen (5', 5") in Längsrichtung (6') und an den beiden Enden der Verbundfolien-Oberflächen (5, 5') erzielt.

Je nach Anwendungsbereich wird das Flachschlauchkissen (1) kreisförmig (7) zwischen einem Mauerdurchbruch bzw. Kabelkanal (7) und einem Medienrohr (8) oder Mehrfach-Medienrohr (7) bzw. Mehrfach-Kabel (8) eingelegt. Durch Befüllen und/oder Evakuierung der Vorrichtung über das Druckluftventil (3, 3") mit metallener, kunststoffbeschichteter Ventilverlängerung (4) mit gasförmigen oder pulverisierten oder flüssigen Füllmedien (3) werden die Hohlräume mit dem Quellvlies-Dichtband (2) ausgefüllt. Nach Ablassen der Befüllung aus dem Flachschlauchkissen (1, 2) ist eine einfache Demontage möglich und das Flachschlauchkissen (1, 2) kann wieder verwendet werden.

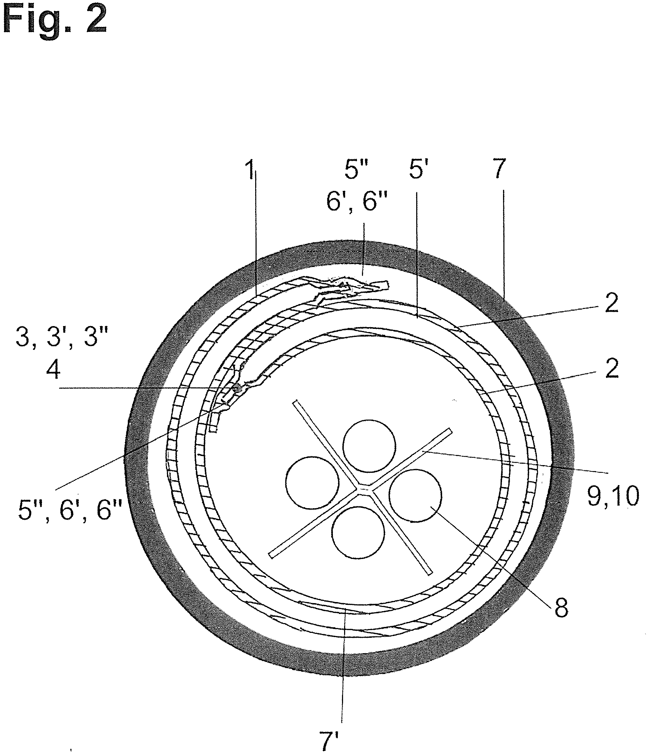

Die Fig. 2 zeigt einen Querschnitt einer der der Fig. 1 ähnlichen Schutzvorrichtung, die zur einlagigen, kreisförmigen (7') Verwendung in mit Kabeln und/oder Rohren (8) belegten Kanälen (7), Rohren (8) und/oder Gebäudeein- oder Durchführungen (7) mit einer Quellvlies-Zwischenraumabdichtung (2) mit Wechselwirkung bei Wärme und Wasser des Abdichtkissens (1, 2) einen Quellvlies-Abdichtstern einmal längs hochfrequenzverschweißt oder vernäht (9) oder einen Quellvlies-Einschiebe-Abdichtstern (10), der aus zwei Längsnähten und einer Quernaht und/oder Hochfrequenzverschweißung besteht.

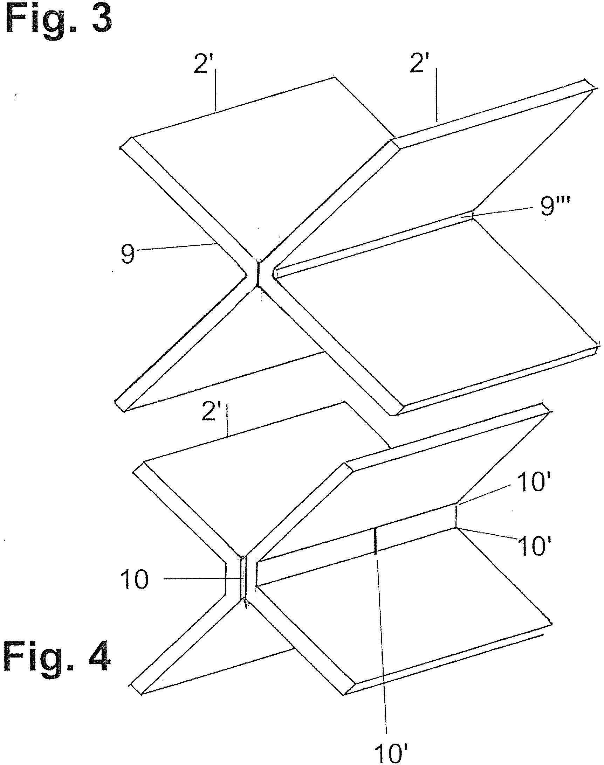

Die Fig. 3 zeigt eine perspektivische Ansicht der in Fig. 2 gezeigten Vierkammer-Quellvlies-Abdichtstern-(9)-Zwischenraumabdichtung mit Wechselwirkung bei Wärme und Wasser, hergestellt aus mindestens zwei übereinander gelegten Quellvlies-Dichtbändern (2'), die mittig in Längsrichtung (9"') hochfrequenzverschweißt (9"') oder vernäht (9"') sind.

Die Fig. 4 zeigt eine ähnliche Vorrichtung wie in Fig. 3, bei der als Vierkammer-Quellviies-Einschiebe-Abdichtstern (10) in Längsrichtung zwei (10") und mittig eine (10') Hochfrequenzschweißung und/oder Naht angebracht sein können.

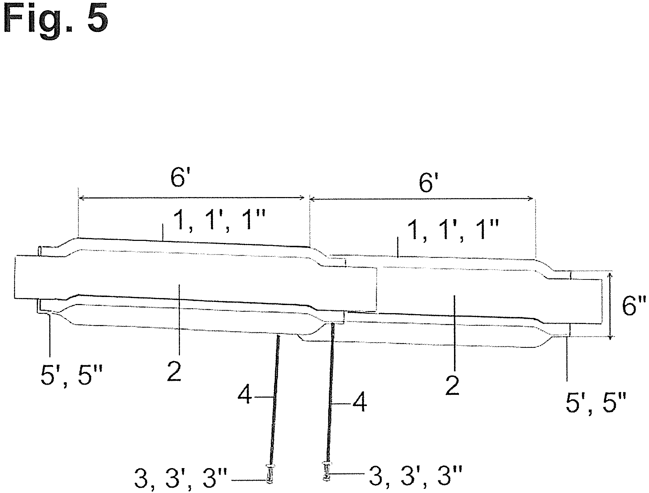

Die Fig. 5 zeigt eine der Fig. 1 ähnliche perspektivische Ansicht bei längsförmigen oder bogenförmigen Dehnfugen mit Anwendung bis über 100 m mit der Ausbildung, dass das Flachschlauchkissen (1, 2) oder mehrere Flachschlauchkissen (1', 1", 2) vorteilhaft versetzt bzw. übereinander eingebracht ist bzw. sind, bei der die Flachschlauchkissen (1', 1", 2) aus einer kerbzähen, berstdruckbeständigen Verbundfolie (1"') in Längsrichtung gefaltet und im Bahngasschweißen (5') auch in Längen bis über 300 m und Breiten bis 60 cm als Flachschlauchkissen [1', 1", 2) herstellbar sind.

Durch Befüllen der Flachschlauchkissen (1', 1") mit gasförmigen Füllmedien über das Druckluftventil (3) werden Hohlräume (12, 13) ausgefüllt; für Überwachungen von Fugenbewegungen (11), Temperaturänderungen und Leckstellen ist ein einfaches 2,4-GHZ-Überwachungsmesssystem (3') adaptierbar. Nach Evakuierung der Befüllung über das Reifenventil (3") aus dem Flachschlauchkissen (1', 1", 2) sind eine Demontage für Inspektionsarbeiten und das Wiederverwenden des Flachschlauchkissens (1', 1", 2) möglich.

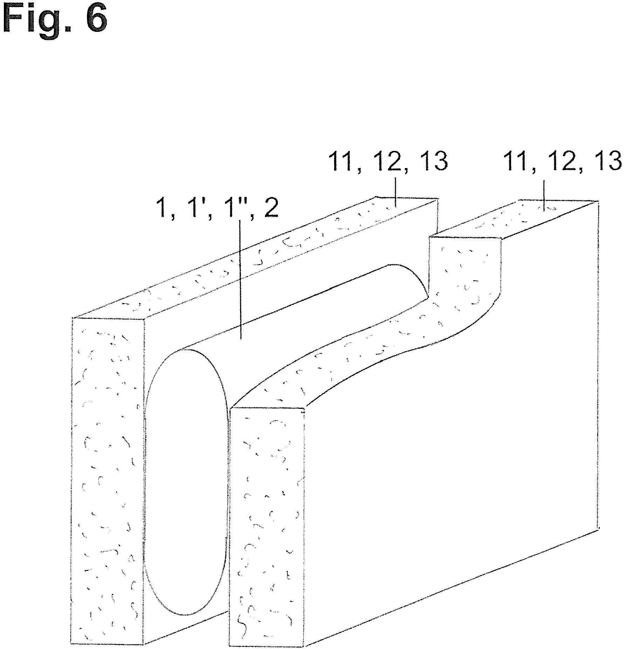

Die Fig. 6 zeigt eine perspektivische Ansicht der in den Figuren 1 und 5 gezeigten Wasserschutzvorrichtung in Dehnfugen bzw. Gewerken, bei denen das Flachschlauchkissen (1, 1', 1", 2) durch Befüllen die Hohlräume zwischen den Fugenflanken (11, 12, 13) ausfüllt.

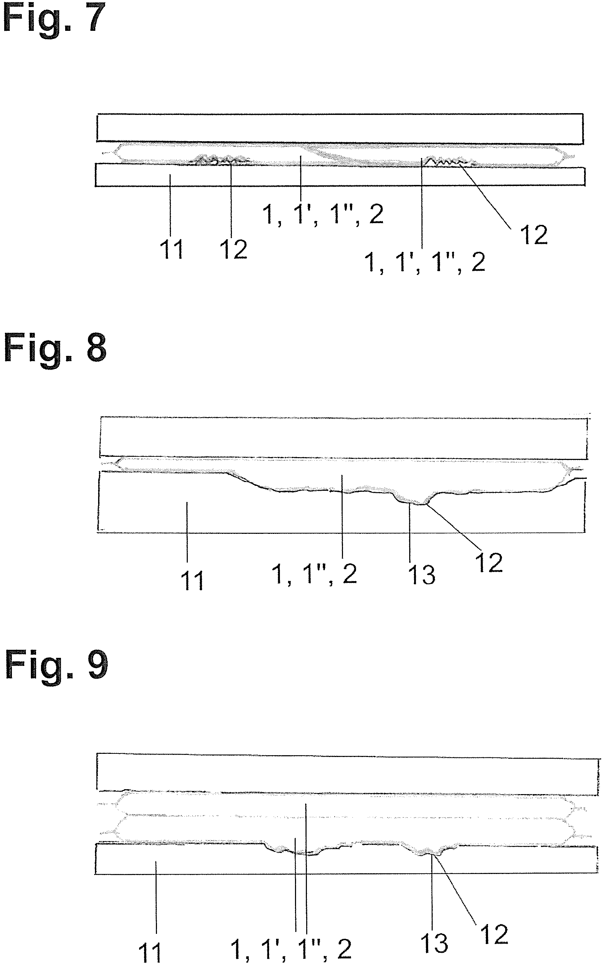

Die Fig. 7 zeigt einen Querschnitt der Figuren 1, 5 und 6 mit der Ausgestaltung, dass das Flachschlauchkissen (1', 1", 2) überlappt in einer Dehnfuge von Gewerken (11) über Fugenversatzstellen (12) aus Betonresten eingebracht sein kann.

Die Fig. 8 zeigt einen ähnlichen Querschnitt wie in den Figuren 1, 5, 6 und 7 mit der Ausgestaltung, dass das Flachschlauchkissen (1, 1", 2) Fugenversatzstellen (13) von bis zu 6 cm auf einer Länge von 1 Meter mit Betonresten (12) in der Dehnfuge (11) nach Befüllung zuverlässig gegen Wasserdurchdringung abdichten kann.

Die Fig. 9 zeigt einen der Fig. 8 ähnlichen Querschnitt mit der Ausgestaltung, dass vorteilhaft zwei Abdichtkissen (1, 1", 2) übereinander gelagert, die Dehnfugen (11) mit einem größer als die zulässigen Flachschlauchkissenabdichtbreite (1', 1", 2) und Fugenversatzstellen (12, 13) gegen Wasserdurchdringung abdichten können.

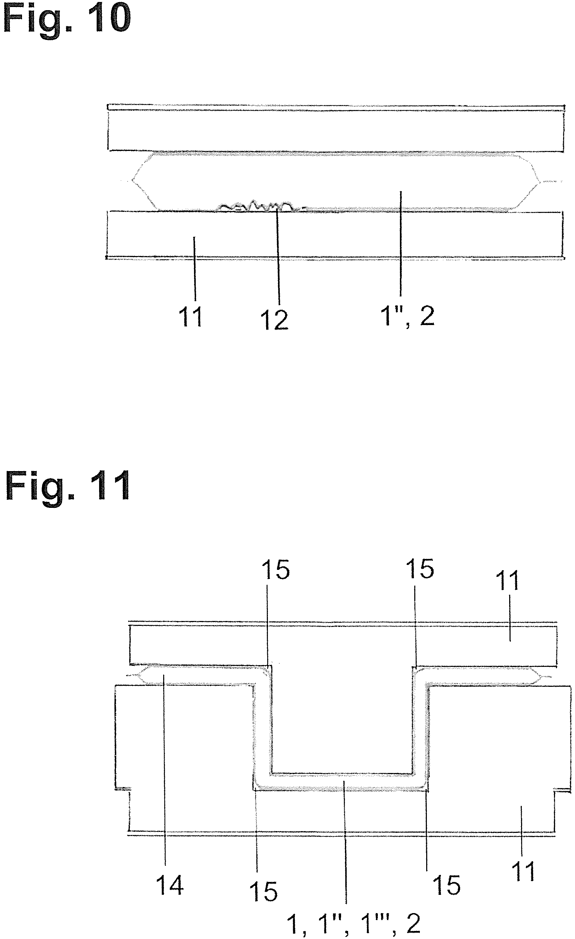

Die Fig. 10 zeigt einen der Fig. 9 ähnlichen Querschnitt mit der Ausgestaltung, dass das Flachschlauchkissen (1, 1 ", 2) in einer Flachschlauchkissen-Sonderbreite (1 ", 2) dargestellt ist.

Die Fig. 11 zeigt einen den Figuren 6, 7, 8 und 10 ähnlichen Querschnitt mit der Ausgestaltung, dass das Flachschlauchkissen (1, 1", 2) an einem Teilstück in längsförmige (11) und rechteckige (14) Dehnfugen eingebracht sein kann, wobei die Eckbereiche mit Eck-, T- und/oder Kreuzfugen-Rundmodulen (15) ausgestattet sind, so dass eine Abdichtung gegen Wasserfortleitung erreicht wird.

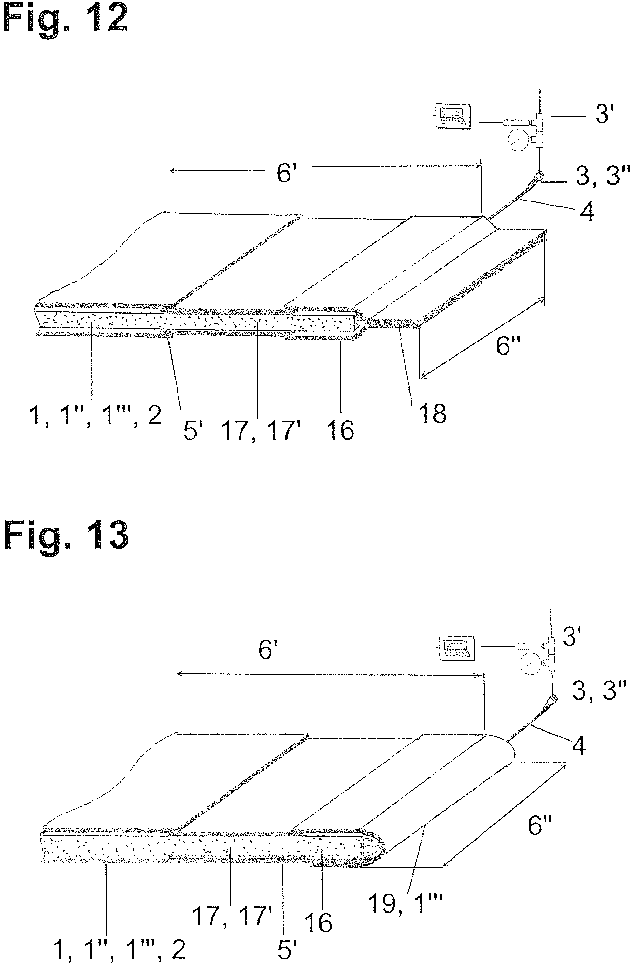

Die Fig. 12 zeigt eine perspektivische Querschnittsansicht eines Vakuum-Flachschlauchkissen-(Ventil)- Grundelements (16) mit Quellvlies-Dichtband innenliegend, mit mindestens einer Lage (2, 17) einseitig mit der Verbundfolie (1"') verklebt, mit einem Vakuum-Druckluftventil (3"), welches mit einer metallenen, kunststoffbeschichteten Ventilverlängerung (4) mit der kerbzähen- und berstdruckbeständigen Verbundfolie (1"') im Heißsiegelschweißverfahren (5") verschlossen ist. Das Flachschlauchkissen-(Ventil)-Grundelement (16) wird maßgerecht rundum im Bahngasschweißverfahren in Lieferbreiten (6") von bis 12 m und Längen (6') von bis 100 m mit aneinander liegendem Quellvlies-Dichtband (2, 17) und überlappender Verbundfolie (1"') im Bahngasschweißverfahren (5') zug- und druckfest hergestellt. Mehrere Grundelemente können über eine lösbare Grundprofilhalterung zur Aufnahme von Ösen, Seilen, Schrauben, Nägeln und dergl. (18) miteinander zug- und druckfest verbunden werden. Für Temperatur- und Dichtigkeitsüberwachungszwecke einzelner Grundelemente (16) kann nach Evakuierung der Restluft an jedem Reifenventil (3) mit einem 2,4-GHZ- oder gleichwertigen Überwachungsmesssystem Vakuum (3') angebracht werden.

Die Fig. 13 zeigt eine der Fig. 12 ähnliche, perspektivische Ansicht eines Flachschlauchkisssens mit Ventil-Grundelement (16) ohne Grundprofilhalterung (19), wobei je nach Anwendungsfalle die Vakuum-Flachschlauchkissen-Ventil-Grundelemente in den Randbereichen versetzt übereinander oder nebeneinander gelagert im Bahngasschweißverfahren (5') als Einzel-Grundelement (16) nicht lösbar miteinander verbunden sind, jedes Grundelement jedoch für sich über das Reifenventil (3') überwacht wird.

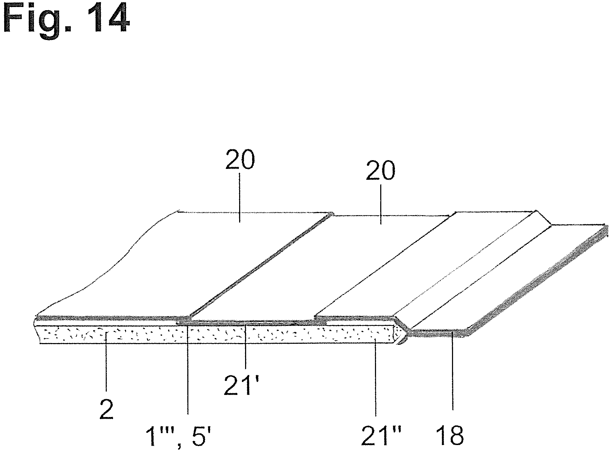

Die Fig. 14 zeigt eine der Fig. 12 ähnliche, perspektivische Ansicht einer Wasserschutzvorrichtung in Gewerken, bei denen die Verbundfolien-Grundprofilkörper einer Wassergemisch-Schutzvorrichtung (20) das Quellvlies-Dichtband (2) einseitig mit elastischem Klebstoff (21') mit der Verbundfolie (1"') verklebt und mit einer Halterung (18) ausgestattet sind. Die Verbundfolien (1"') können in Längen bis 12 m und parallel übereinander gelagert im Bahngasschweißverfahren (5') bis über 100 m zug- und druckfest verbunden werden. Die Grundprofilkörper (20) können mit der Quellvlies-Dichtbandseite (2) mit elastischen Klebstoffen (21") an Mauerwerken und/oder Metall- bzw. Kunststoffbehältern angeklebt werden.

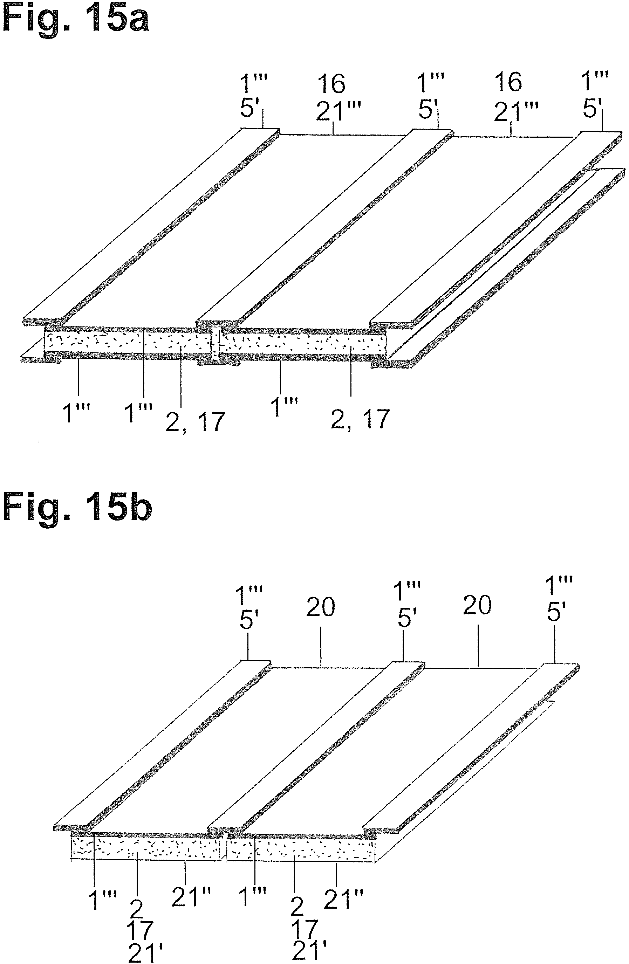

Die Fig. 15a zeigt eine perspektivische Ansicht eines des den Figuren 12 und 13 ähnlichen Vakuum-Flachschlauchkissens mit Ventil (16) in Gewerken mit der Ausgestaltung, dass je nach Anwendungsfall das Quellvlies-Dichtband (2) ein- oder mehrlagig (17) im Grundkörperprofil (16) einseitig angeklebt ist, wobei die Grundkörperprofile (16), nebeneinander angeordnet (21'"), mit Verbundfolienstreifen (1'") im Bahngasschweißverfahren (5') miteinander verbunden werden.

Die Fig. 15b zeigt eine perspektivische, den Figuren 14 und 15a ähnliche Ansicht einer Wassergemisch-Schutzvorrichtung (20) mit der Ausgestaltung, dass je nach Anwendungsfall das Quellvlies-Dichtband (2) ein- oder mehrlagig (17) einseitig mit der Verbundfolie (1"', 21') verklebt, die Grundprofilkörper (20) nebeneinander angeordnet mit Verbundfolienstreifen (1"') im Bahngasschweißverfahren (5') miteinander verbunden werden. Die Grundprofilkörper (20) können mit der Quellvlies-Dichtbandseite (2) mit elastischen Klebstoffen (21") an Mauerwerken und/oder Metall-, Kunststoffbehältern angeklebt werden.

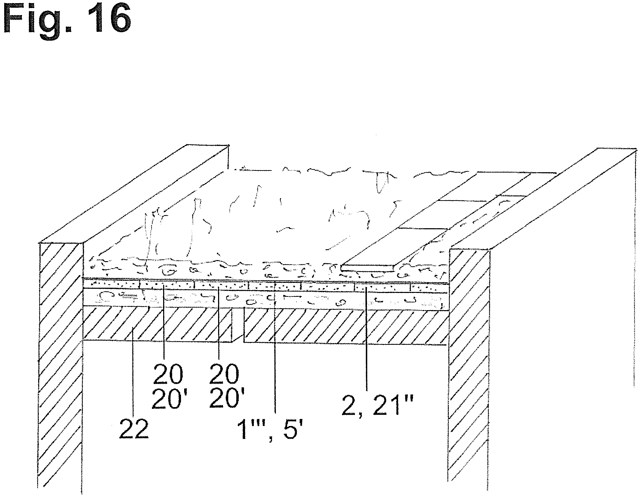

Die Fig. 16 zeigt eine perspektivische, den Figuren 14 und 15b ähnliche Ansicht einer Wasserschutzvorrichtung (20) in Gewerken (22), in dem die Grundprofilkörper (20) nebeneinander angeordnet, im Bahngasschweißverfahren (5') miteinander verbunden (20), mit der Quellvlies-Dichtbandseite (2) auf das Bauwerk aufgelegt oder angeklebt (21 ") sind.

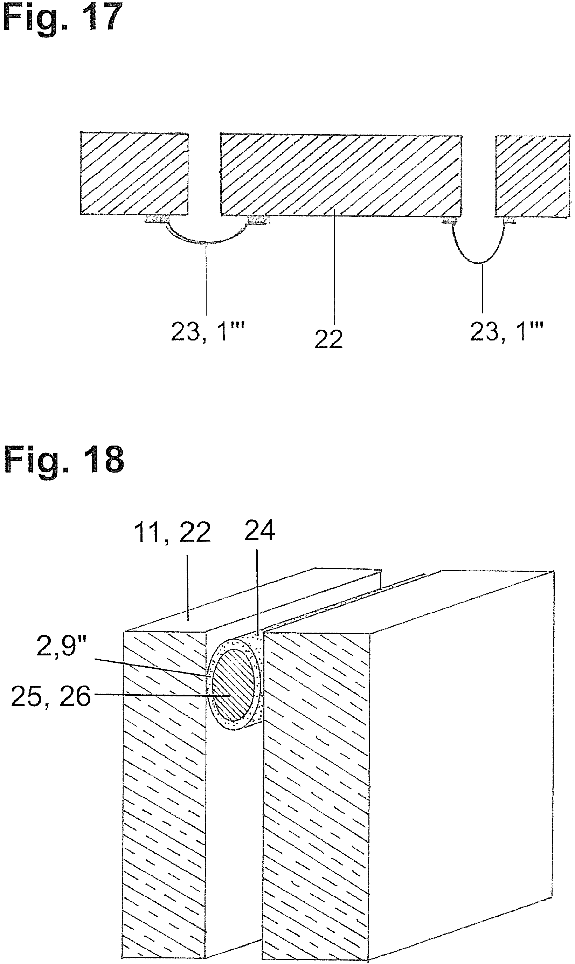

Die Fig. 17 zeigt einen Querschnitt einer Wasserablaufrinne (23) aus einer Verbundfolie (1'"), die unterhalb und/oder oberhalb einer Dehnfuge (23) in Gewerken (22) mindestens alle 2 m am Bauwerk befestigt wird.

Die Fig. 18 zeigt eine perspektivische Ansicht einer Quellvlies-Rundschnur-Wassersperrschicht-Vorrichtung (24) in Dehnfugen von Gewerken (11, 22) oberhalb der Fuge mit der Ausgestaltung, dass je nach Anwendungsfalle eine PE-Rundschnur (25), Brandschutzband- oder -schnur (26) mit einer Quellvlies-Dichtbandumhüllung (2), im Hochfrequenzschweißverfahren (9"') befestigt, eingebracht ist.

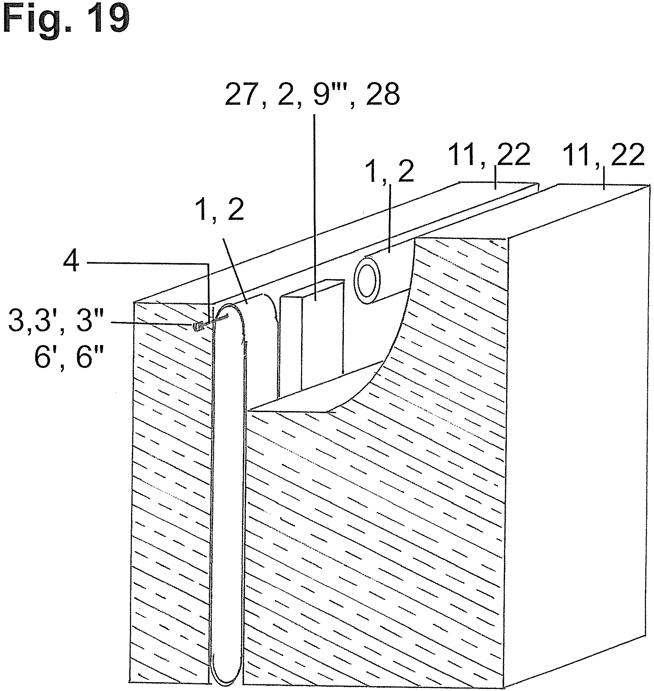

Die Fig. 19 zeigt eine perspektivische, der Fig. 18 ähnliche Ansicht als Wasser-Feuer-Durchdring-Schutzvorrichtung (27) in Dehnfugen (11, 22) in Kombination mit einem Abdichtkissen mit Ventil (1, 2, 3, 3', 3", 4, 6', 6"). In der Kombination dient das Abdichtkissen mit Ventil als Wassersperre bis 10 m Wassersäule mit den Eigenschaften, dass im Leckagefall durch Brand mit einem am Reifenventil (3) angebrachten 2,4-GHZ-Überwachungsmesssystem (3') ortsaufgelöste Temperatur- und Druckänderungen an eine zentrale Leitstelle übermittelt werden können, dass das Abdichtkissen mit Ventil (1, 2, 3) bei > 100 °C aufplatzt und das quellvliesumhüllte flexible Brandschutzband (27, 2, 9"', 28) durch Aufquellen der Brandschutzmasse des Bands (28) ein Feuer-Durchdringschutz erreicht wird.

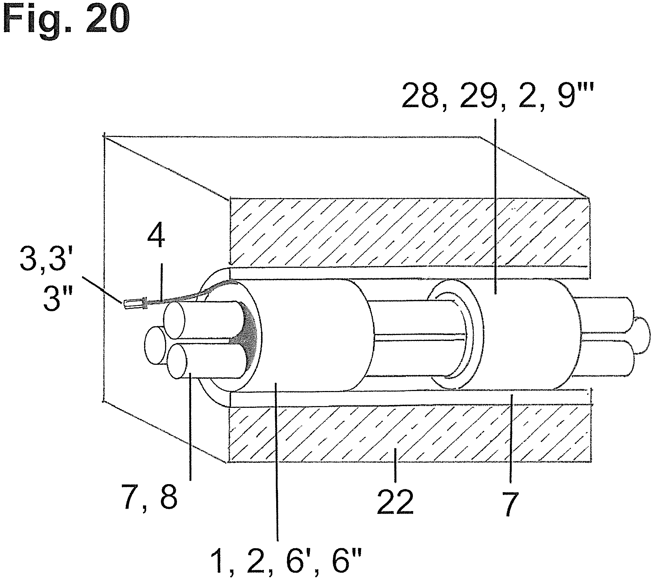

Die Fig. 20 zeigt eine der Fig. 19 ähnliche perspektivische Ansicht mit der Ausgestaltung, dass die Wasser-Feuer-Durchdring-Schutzvorrichtung (27) in kreisförmiger Anwendung (29) in Kanälen (7) Anwendung findet. Das Abdichtkissen mit Ventil (1, 2, 3, 3', 4, 6', 6") zeigt einen ähnlichen Querschnitt der Schutzvorrichtung der Fig. 2 bei kreisförmiger Verwendung (7') in mit Kabeln und/oder Rohren (8) und/oder Gebäudeein- oder -durchführungen. Zusätzlich zu der in Fig. 2 gezeigten Wasserschutzvorrichtung befindet sich unmittelbar nach dem Abdichtkissen mit Ventil (1, 2) eine Feuer-Durchdring-Schutzvorrichtung (28), die kreisförmig in mindestens einer Lage (29) um die in Kanälen (7) belegten Kabel und/oder Rohre (8) eingebracht ist.

Von Bedeutung ist noch, dass das Flachschlauchkissen mit Berstdruckbeständigkeit bis 9 bar, Kerbzähigkeit bis 40 N/cm², Chemikalienbeständigkeit gegen pH2, pH12, Benzin, Diesel, Kerosin, Paraffinöl und Temperaturbeständigkeit von -60 °C bis +70 °C hergestellt ist.

### Bezugszeichenliste

Fig. 1
   - 1: Flachschlauchkissen (Ventil)
   - 1': Flachschlauchkissen (Ventil), zwei Stück übereinander gelegt
   - 1'': Flachschlauchkissen (Ventil) in Sonderbreite
   - 1''': kerbzäh- und berstdruckbeständige Verbundfolie
   - 2: Quellvlies-Dichtband für Außenbeschichtung
   - 3: Reifenventil zur Befüllung
   - 3': Überwachungsmesssystem Vakuum, Druck und Temperatur
   - 3'': Reifenventil zur Evakuierung
   - 4: Ventilverlängerung, metallen, kunststoffbeschichtet
   - 5': Bahngasschweißverfahren
   - 5'': Heißsiegelschweißverfahren
   - 6': Abdichtkissen, Längsseite-/Richtung Kissenlänge
   - 6'': Abdichtkissen-Querseite (Stirnseite Kissenbreite)
Fig. 2
   - 1: Flachschlauchkissen (Ventil)
   - 2: Quellvlies-Dichtband für Außenbeschichtung
   - 3: Reifenventil zur Befüllung
   - 3': Überwachungsmesssystem Vakuum, Druck und Temperatur
   - 3": Reifenventil zur Evakuierung
   - 4: Ventilverlängerung metallen kunststoffbeschichtet
   - 5': Bahngasschweißverfahren
   - 5": Heißsiegelschweißverfahren
   - 6': Abdichtkissen Längsseite-/Richtung Kissenlänge
   - 6": Abdichtkissen Querseite (Stirnseite Kissenbreite)
   - 7: Kabelkanal, Rohr, Gebäudeein- und/oder -durchführung
   - 7': einlagige kreisförmige Anordnung
   - 8: Kabel oder Rohr
   - 9: Quellvlies-Abdichtstern hochfrequenzverschweißt oder genäht
   - 10: Quellvlies Einschiebe-Abdichtstern genäht
Fig. 3
   - 2': Quellvlies-Dichtband zwei Stücke übereinander gelagert
   - 9: Vierkammer-Quellvlies-Abdichtstern
   - 9''': mittige, längslaufende Hochfrequenzschweißung oder Naht
Fig. 4
   - 2': Quellvlies-Dichtband, zwei Stück übereinander gelagert
   - 10: Vierkammer-Quellvlies-Einschiebe-Abdichtstern
   - 10': zwei längslaufende und mindestens eine Mittel-Hochfrequenzschweißung und/oder Naht
Fig. 5
   - 1: Flachschlauchkissen (Ventil)
   - 1': Flachschlauchkissen (Ventil), zwei Stück übereinander gelegt
   - 1": Flachschlauchkissen (Ventil) in Sonderbreite
   - 2: Quellvlies-Dichtband-Außenbeschichtung
   - 3: Reifenventil zur Befüllung
   - 3': Überwachungsmesssystem für Vakuum, Druck und Temperatur
   - 3": Reifenventil zur Evakuierung
   - 4: Ventilverlängerung metallen kunststoffbeschichtet
   - 5': Bahngasschweißverfahren
   - 5": Heißsiegelschweißverfahren
   - 6': Flachschlauchkissenlänge
   - 6": Flachschlauchkissenbreite
Fig. 6
   - 1: Flachschlauchkissen (Ventil)
   - 1': Flachschlauchkissen (Ventil), zwei Stück übereinander gelegt
   - 1": Flachschlauchkissen (Ventil) in Sonderbreite
   - 2: Quellvlies-Dichtband-Außenbeschichtung
   - 11: Dehnfuge in Gewerken
   - 12: Fugenversatzstellen (Betonreste)
   - 13: Fugenversatzstellen (Betonausbruchstellen)
Fig. 7
   - 1: Flachschlauchkissen (Ventil)
   - 1': Flachschlauchkissen (Ventil), zwei Stück überlappt übereinander gelegt
   - 1": Flachschlauchkissen (Ventil) in Sonderbreite
   - 2: Quellvlies-Dichtband-Außenbeschichtung
   - 11: Dehnfuge in Gewerken
   - 12: Fugenversatzstellen (Betonreste)
Fig. 8
   - 1: Flachschlauchkissen (Ventil)
   - 1": Flachschlauchkissen (Ventil) in Sonderbreite
   - 2: Quellvlies-Dichtband-Außenbeschichtung
   - 11: Dehnfuge in Gewerken
   - 12: Fugenversatzstellen (Betonreste)
   - 13: Fugenversatzstellen (Betonausbruchstellen)
Fig. 9
   - 1: Flachschlauchkissen (Ventil)
   - 1': Flachschlauchkissen (Ventil), zwei Stück übereinander gelegt
   - 1": Flachschlauchkissen (Ventil) in Sonderbreite
   - 2: Quellvlies-Dichtband-Außenbeschichtung
   - 11: Dehnfuge in Gewerken
   - 12: Fugenversatzstellen (Betonreste)
   - 13: Fugenversatzstellen (Betonausbruchstellen)
Fig. 10
   - 1": Flachschlauchkissen (Ventil) in Sonderbreite
   - 2: Quellvlies-Dichtband-Außenbeschichtung
   - 11: Dehnfuge in Gewerken
   - 12: Fugenversatzstellen (Betonreste)
Fig. 11
   - 1: Flachschlauchkissen (Ventil)
   - 1'': Flachschlauchkissen (Ventil) in Sonderbreite
   - 1''': kerbzäh- und berstdruckbeständige Verbundfolie
   - 2: Quellvlies-Dichtband-Außenbeschichtung
   - 11: Dehnfuge in Gewerken
   - 14: im rechteckigen Dehnfugenverlauf
   - 15: Rundmodule für Eck-, T- und/oder Kreuzfugen
Fig. 12
   - 1: Flachschlauchkissen (Ventil)
   - 1'': Flachschlauchkissen (Ventil) in Sonderbreite
   - 1''': kerbzäh- und berstdruckbeständige Verbundfolie
   - 2: Quellvlies-Dichtband-Außenbeschichtung
   - 3: Reifenventil zur Befüllung
   - 3': Überwachungsmesssystem für Vakuum, Druck und Temperatur
   - 3'': Reifenventil zur Evakuierung
   - 4: Ventilverlängerung, metallen, kunststoffbeschichtet
   - 5': Bahngasschweißverfahren
   - 6': Flachschlauchkissenlänge
   - 6": Flachschlauchkissenbreite
   - 16: Grundelement des Vakuum-Flachschlauchkissens (Ventils)
   - 17: Quellvlies-Dichtband, innenliegend mit mindestens einer Lage
   - 17': Quellvlies-Dichtband und eine Magnet- oder Bleifolie innenliegend
   - 18: Lösbare Grundprofilhalterungen zur Aufnahme von Ösen, Seilen, Schrauben u. dergl.
Fig. 13
   - 1: Flachschlauchkissen (Ventil)
   - 1'': Flachschlauchkissen (Ventil) in Sonderbreite
   - 1''': kerbzäh- und berstdruckbeständige Verbundfolie
   - 2: Quellvlies-Dichtband-Außenbeschichtung
   - 3: liesenventil zur Befüllung
   - 3': Überwachungsmesssystem Vakuum, Druck und Temperatur
   - 3": Reifenventil zur Evakuierung
   - 4: Ventilverlängerung metallen kunststoffbeschichtet
   - 5': Bahngasschweißverfahren
   - 6': Flachschlauchkissenlänge
   - 6'': Flachschlauchkissenbreite
   - 16: Vakuum-Flachschlauchkissen (Ventil) Grundelement in Meterware
   - 17: Quellvlies-Dichtband innenliegend mit mindestens einer Lage
   - 17': Quellvlies-Dichtband und eine Magnet- oder Bleifolie innenliegend
   - 19: ohne lösbare Grundprofilhalterung
Fig. 14
   - 1''': kerbzäh- und berstdruckbeständige Verbundfolie
   - 2: Quellvlies-Dichtband-Außenbeschichtung
   - 5': Bahngasschweißverfahren
   - 18: Halterung
   - 20: Grundprofilkörper einer Wassergemisch-Schutzvorrichtung
   - 21': Quellvlies-Dichtband (2) einseitig mit Verbundfolie (1"') verklebt
   - 21": Quellvlies-Dichtband (2) mit elastischen Klebstoffen an Mauerwerken und/oder Metall-/Kunststoffbehältern anklebbar
Fig.
15a
   - 1''': kerbzäh- und berstdruckbeständige Verbundfolie
   - 2: Quellvlies-Dichtband-Außenbeschichtung
   - 5': Bahngasschweißverfahren
   - 16: Vakuum-Flachschlauchkissen (Ventil), Grundelement in Meterware
   - 17: Quellvlies-Dichtband (2), innenliegend mit mindestens einer Lage
   - 21''': Grundprofilkörper (16) nebeneinander angeordnet, mit Verbundfolie (1'") im Bahngasschweißen (5') miteinander verbunden
Fig. 15b
   - 1''': kerbzäh- und berstdruckbeständige Verbundfolie
   - 2: Quellvlies-Dichtband-Außenbeschichtung
   - 5': Bahngasschweißverfahren
   - 17: Quellvlies-Dichtband, innenliegend mit mindestens einer Lage
   - 20: Grundprofilkörper einer Wassergemisch-Schutzvorrichtung
   - 21': Quellvlies-Dichtband, einseitig mit Verbundfolie verklebt
   - 21'': Quellvlies-Dichtband, mit elastischen Klebstoffen an Mauerwerken und/oder Metall-/Kunststoffbehältern anklebbar
   Fig. 16
   - 1''': kerbzäh- und berstdruckbeständige Verbundfolie
   - 2: Quellvlies-Dichtband-Außenbeschichtung
   - 5': Bahngasschweißverfahren
   - 20: Grundprofilkörper einer Wassergemisch-Schutzvorrichtung
   - 20': Grundprofilkörper nebeneinander angeordnet, mit Verbundfolie (1"') im Bahngasschweißen (5') miteinander verbunden
   - 21'': Quellvlies-Dichtband, mit elastischen Klebstoffen an Mauerwerken und/oder Metall-/Kunststoffbehältern anklebbar
   - 22: Gewerke
Fig. 17
   - 1''': kerbzäh- und berstdruckbeständige Verbundfolie
   - 22: Gewerke
   - 23: Wasserablaufrinne unterhalb oder oberhalb der Fuge
Fig. 18
   - 2: Quellvlies-Dichtband-Außenbeschichtung
   - 9''': Hochfrequenzschweißverfahren
   - 11: Dehnfuge in Gewerken
   - 22: Gewerke
   - 24: Quellvlies-Rundschnur, Wassersperrschicht
   - 24': Quellvlies-Dichtband im Hochfrequenzschweißverfahren (9"") umhüllte PE-Rundschnur (25) oder Brandschutzschnur (26)
   - 25: PE-Rundschnur
   - 26: Brandschutzschnur
Fig. 19
   - 1: Flachschlauchkissen (Ventil)
   - 2: Quellvlies-Dichtband-Außenbeschichtung
   - 3: Reifenventil zur Befüllung
   - 3': Überwachungsmesssystem für Vakuum, Druck und Temperatur
   - 3'': Reifenventil zur Evakuierung
   - 4: Ventilverlängerung, metallen, kunststoffbeschichtet
   - 6': Flachschlauchkissenlänge
   - 6'': Flachschlauchkissenbreite
   - 9''': Hochfrequenzschweißverfahren
   - 11: Dehnfuge in Gewerken
   - 22: Gewerke
   - 27: Wasser-Feuer-Durchdring-Schutzvorrichtung/-band in Dehnfugen
   - 27': Quellvlies-Dichtband (2) im Hochfrequenzschweißverfahren (9"') umhülltes, flexibles Brandschutzband (28)
   - 28: Brandschutzband, flexibel
Fig. 20
   - 1: Flachschlauchkissen (Ventil)
   - 2: Quellvlies-Dichtband-Außenbeschichtung
   - 3: Reifenventil zur Befüllung
   - 3': Überwachungsmesssystem für Vakuum, Druck und Temperatur
   - 3'': Reifenventil zur Evakuierung
   - 4: Ventilverlängerung, metallen, kunststoffbeschichtet
   - 6': Flachschlauchkissenlänge
   - 6'': Flachschlauchkissenbreite
   - 7: Kabelkanal, Rohr, Gebäudeein- und/oder -durchführung
   - 8: Kabel oder Rohr
   - 9''': Hochfrequenzschweißverfahren
   - 11: Dehnfuge in Gewerken
   - 22: Gewerke
   - 27': Quellvlies-Dichtband (2) im Hochfrequenzschweißverfahren (9"') umhülltes, flexibles Brandschutzband (28)
   - 28: Brandschutzband, flexibel
   - 29: Wasser-Feuer-Durchdring-Schutzvorrichtungsband, kreisförmig in Kanälen (7)

## Patentansprüche

1. Vorrichtung zum Schutz vor Wassereintritt und Feuerdurchdringung in Zwischenräumen und in Hohlräumen durch Dehnfugen (11, 12, 13, 14, 22) in Gewerken, Kabelkanälen (7, 8), Gebäudedurchführungen (7, 8), die mit Kabeln (8) und/oder Rohren (8) belegt sind und je nach Anforderung als Brandschutz- bzw. Leckage-Schutzvorrichtungen (20, 20'), Deponien, Tankanlagen, Transportund/oder Sicherheitsbehältern im Seebereich dienen,
**dadurch gekennzeichnet, dass** die Vorrichtung aus einem in der Länge (6', 1', 21"') und Breite (1", 6", 21'") festgelegten Flachschlauchkissen (1) besteht, das an den Außenseiten (1) mit einem Quellvlies-Dichtband (2) ausgerüstet ist, und dass das Leckage- bzw. Schutz-Flachschlauchkissen (16) im Innern mit mindestens einem QuellvliesDichtband (17, 17') versehen ist, das an der Längsseite (6') und der Querseite (6") zugfeste Verschlüsse (18) aufweist und über mindestens ein kunststoffbeschichtetes, metallenes Druckluftventil (3, 3") mit Ventilverlängerung (4) befüllt oder evakuiert (3, 3") wird und je nach Anforderung mit einem Funk-Überwachungs- bzw. Kontrollsystem (3') ausgestattet werden kann.

2. Vorrichtung nach Anspruch 1,
**dadurch gekennzeichnet,**
**dass** eine einlagige, kreisförmige (7') oder längsförmige (1) und/oder längsförmige, zweilagige (1') Anordnung des Flachschlauchkissens (1) vorgesehen ist, wobei das Ventil (3, 3') mittels einer Ventilverlängerung (4) für eine Summenleckrate von 5,5 mbar/s im Heißsiegelschweißverfahren (5") mit dem Flachschlauchkissen (1) verbunden ist.

3. Vorrichtung nach Anspruch 1 oder 2,
**dadurch gekennzeichnet,**
**dass** das Flachschlauchkissen (1) im Anwendungsbereich als Einzelelement horizontal, vertikal, voll- oder halbkreisförmig im Rohrumfang (8) oder der Dehnfugensegmentlänge (1') angeordnet ist, wobei sich das Druckluftventil (3, 3") mindestens an einem Ende (3) des Flachschlauchkissens (1) befindet und durch die metallene Verlängerung (4) ein in alle Richtungen biegsames Sonderventil (3) hergestellt werden kann.

4. Vorrichtung nach den Ansprüchen 1 bis 3,
**dadurch gekennzeichnet,**
**dass** sie innenliegend oder außenliegend in Längs- oder Querrichtung zusätzlich ein elastisches, nicht dauerhaft verklebendes (2, 17), nach Wasserkontakten schnell quellendes Quellvlies-Dichtband mit einem Flächengewicht von 480 g/m² (2, 2', 9, 10, 17, 21', 21", 24', 27') aufweist.

5. Vorrichtung nach einem der Ansprüche 1 und 4,
**dadurch gekennzeichnet,**
**dass** beim Abdichten von mit Kabeln (8) und/oder Kabelrohren (8) durchzogenen Kabelkanalrohren (7) im Bereich der Berührungsstellen von Kabelkanalrohren (8) und/oder Kabelkanalrohren (7) eine Umwicklung aus einem QuellvliesDichtband (2) mit bzw. ohne Trennfolie eingesetzt ist und sich im Zwickel Füllelemente oder Quellvlies-Abdichtsterne (9, 10) befinden, die aus Dichtbandmaterial (2) hergestellt sind.

6. Vorrichtung nach Anspruch 5,
**dadurch gekennzeichnet,**
**dass** die Quellvlies-Abdichtsterne zum Einschieben zwischen zwei und mehr Kabeln aus zwei übereinander gelegten Quellvlies-Abdichtbändern (2') mit zwei Längsnähten und einer Quernaht (10') und/oder zwei übereinander gelegten Quellvlies-Abdichtbändern, mit einer ≥ 5mm breiten Längsschweißnaht (9"') verbunden, hergestellt ist.

7. Vorrichtung nach einem der Ansprüche 1 bis 7,
**dadurch gekennzeichnet,**
**dass** das Flachschlauchkissen (1, 2, 3, 3') in Kombination mit einer Wasser-Feuer-Durchdringungs-Schutzvorrichtung bei längsförmiger Anwendung in Dehnfugen (27) oder kreisförmiger Anwendung (29) in mit Kabeln und/oder Rohren (8) belegten Kanälen (7) als druckwasserdichte Sperrschicht ausgestattet ist, die mit einem möglichen Überwachungsmesssystem (3') und einem mit Quellvlies-Dichtband (2) im Hochfrequenzschweißverfahren (9"') umhüllten, flexiblen Brandschutzband (28) als Feuerdurchdringungsschutz (27, 29) hergestellt ist.

8. Vorrichtung nach Anspruch 1,
**dadurch gekennzeichnet,**
**dass** das Flachschlauchkissen (1) mit gasförmigen, pulverisierten oder flüssigen Medien, Quellvlies-Dichtbändern (2, 17) und/oder Magnet- oder Bleibändern (17') gefüllt ist.

9. Vorrichtung nach Anspruch 1, 2, 3 und 4
**dadurch gekennzeichnet,**
**dass** das Flachschlauchkissen (1', 1") in der Länge (1', 6') dem Umfang des Kanals (7) und in der Länge der Dehnfuge (1, 1', 6') angepasst sowie und in den Breiten von 135, 285 oder 420 mm (1 ", 6") hergestellt ist.

10. Vorrichtung nach Anspruch 1, 2 und 8,
**dadurch gekennzeichnet,**
**dass** die Wasserleckage- und/oder Schutz-Flachschlauchkissenvorrichtung (1'", 16, 20, 20', 21', 21'") aus einem oder mehreren übereinander oder nebeneinander gelegten Grundelemente/n als Endlos-Meterware in Breiten (6") von bis 12 m und in Längen (6') von bis 100 m im Bahngasschweißen (5') miteinander rundum zug- und druckfest hergestellt ist und einseitig mit einem QuellvliesDichtband (2) mittels elastischem Klebstoff (21') verbunden ist.

11. Vorrichtung nach Anspruch 1, 2 und 3,
**dadurch gekennzeichnet,**
**dass** die Wasserleckage-Schutzvorrichtung bzw. das Flachschlauchkissen (16, 20, 21', 21") vorzugsweise im Inneren mit einer oder mehreren miteinander verklebten Quellvliesdichtbandschichten (17) von 480 g/m² hergestellt ist.

12. Vorrichtung nach einem der Ansprüche 1, 4, 5, 7, 10 und 11,
**dadurch gekennzeichnet,**
**dass** das Quellvliesdichtband (2, 17) von 480 g/m² aus einem mechanisch verfestigtem PP-Vlies mit wasserabsorbierendem, schnell wasserquellenden Polymer hergestellt ist.

13. Vorrichtung nach einem der Ansprüche 1, 2, 3, 7, 8, 9, 10 und 11,
**dadurch gekennzeichnet,**
**dass** das Flachschlauchkissen (1,1', 1", 6', 6", 16, 20, 21'") aus einem gefalteten Band (1'") oder Schlauch hergestellt ist, das bzw. der je nach dem Anwendungsbereich aus Thermoplast, Elastomeren und/oder schwer entflammbaren Thermoplast-Elastomer-Gemischen besteht, wobei diese Stoffe metallene und/oder metallfreie Einlagen aufweisen.

14. Vorrichtung nach einem der Ansprüche 1, 2, 3, 7 bis 11 und 13,
**dadurch gekennzeichnet,**
**dass** das Band (1"') des Flachschlauchkissens (1, 1', 1", 6', 6", 16, 20, 21'") vorzugsweise mindestens aus einer fünflagigen Thermoplast-Verbundfolie (1'") mit dem Aufbau
| | |
|---|---|
| - 150-250 µm PE | - 150-250 µm PE |
| - 15-30 µm PET | - 15-30 µm PET |
| - 9-23 µm ALU | - 9-23 µm BLEI |
| - 15-30 µm PET | - 15-30 µm PET |
| - 150-250 µm PE | - 150-250 µm PE |
hergestellt ist.

15. Vorrichtung nach einem der Ansprüche 1, 2, 3, 7, 8, 9, 13, und 14, **dadurch gekennzeichnet,**
**dass** das Flachschlauchkissen eine Summenleckrate von L = ..... 5,5 ≤ 6,2 x 10-8 mbarl/s, entspricht 2,7 mbarl/Jahr,
mit der gelieferten Ventilabschlusskappe aufweist.
